# EUROPEAN PATENT SPECIFICATION

(11) **EP 4 150 042 B1**
(45) Date of publication and mention of the grant of the patent: **10.09.2025**
(21) Application number: 21723781.7
(22) Date of filing: 11.05.2021
(51) Int. Cl.: C12C 11/11, C12G 3/005, C12G 3/06, B67D 1/00, C12H 3/04

(54) **SINGLE-SERVE CAPSULE FOR PREPARING A BEER-LIKE BEVERAGE**
EINZELPORTIONSKAPSEL ZUR ZUBEREITUNG EINES BIERÄHNLICHEN GETRÄNKS
CAPSULE À USAGE UNIQUE POUR PRÉPARER UNE BOISSON DE TYPE BIÈRE

(30) Priority: 15.05.2020 EP 20175082; 15.05.2020 EP 20175081; 15.05.2020 EP 20175077; 15.05.2020 EP 20175078; 15.05.2020 EP 20175079; 23.10.2020 EP 20203689; 23.10.2020 EP 20203700; 27.10.2020 EP 20204148
(43) Date of publication of application: 22.03.2023
(73) Proprietor: Heineken Supply Chain B.V., 2382 PH Zoeterwoude (NL)
(72) Inventor: TESSIOT, Sabine Charlette Jacqueline, 2382 PH Zoeterwoude (NL); BROUWER, Eric Richard, 2382 PH Zoeterwoude (NL); BEKKERS, Augustinus Cornelius Aldegonde Petrus Albert, 2382 PH Zoeterwoude (NL)
(74) Representative: Nederlandsch Octrooibureau
(86) International application number: PCT/EP2021/062520
(87) International publication number: WO 2021/228882

(56) References cited:
- EP-A1- 3 330 216
- WO-A1-2020/055233
- US-A1- 2016 230 133
- "Food Composition and Nutrition tables", 1 January 2015, MEDPHARM, article SOUCI ET AL: "Alcohol free beer", pages: 1151 - 1154, XP055795387
- D. E. BRIGGS ET AL: "Brewing: Science and Practice", 1 January 2004 (2004-01-01), XP055435010, Retrieved from the Internet <URL:http://fars.itvhe.ac.ir/_fars/Documents/99ae7cc8-c9a8-4356-8d24-f6c208322cb7.pdf> [retrieved on 20171213]

## Description

### TECHNICAL FIELD OF THE INVENTION

The present invention relates to a single-serve capsule for preparing a beer-like beverage. More particularly, the invention relates to a capsule whose contents can be mixed with carbonated water to produce a hopped alcoholic beverage with a foam head.

The single-serve capsule has at least two compartments, including a first and a second compartment. The first compartment comprises an aqueous liquid having an ethanol content of 0-10% ABV and comprising 0.1-25 wt.% of protein. The second compartment comprises an alcoholic liquid containing 20-99.9 wt.% ethanol, 0-60 wt.% water, and 30-2,000 mg/kg of hop acids selected from iso-alpha acids, hydrogenated iso-alpha acids, hulupones and combinations thereof, wherein ethanol and water together constitute at least 80 wt.% of the alcoholic liquid.

Further, the invention relates to a process of preparing a hopped alcoholic beverage with a foam head from said capsule, said method comprising
- introducing the single serve capsule into a beverage preparation device;
- releasing the aqueous liquid from the first compartment;
- releasing the alcoholic liquid from the second compartment;
- combining the released aqueous liquid, the released alcoholic liquid, water and carbon dioxide to produce a hopped alcoholic beverage;
- dispensing the hopped alcoholic beverage to produce a hopped alcoholic beverage with a foam head.

### BACKGROUND OF THE INVENTION

The four basic ingredients used in the brewing of beer are malted barley, hops, yeast and water. Malted barley and adjuncts provide starch. The starch is converted into fermentable sugars during mashing. During yeast fermentation these fermentable sugars are converted into alcohol. Proteins originating from malted barley and adjuncts act as foaming agents and enable the formation of a stable foam head when the beer is dispensed for consumption.

During the brewing process, hops are added at the beginning of the boiling stage to give the brew its bitter flavor and more are added at the end of the boil for aroma and flavor. Hops are the cone-shaped female flower of the vine-like plant *humulus lupulus.* Hops are harvested, then dried and processed into pellets, plugs, extracts, or left in their cone form. The most important hop compounds are the hop acids, which can be distinguished as alpha-acids (or humulones) and beta-acids (or lupulones). Neither alpha-acids nor beta-acids are responsible for the bitter flavour of hopped beer. During wort boiling, thermal isomerisation of the alpha-acids produces iso-alpha acids which are largely responsible for the hop-derived bitterness of beer.

It is known that the light-stability of beers is improved by hydrogenating iso-alpha-acids to produce bitter tasting dihydro, tetrahydro and hexahydro iso-alpha acids. It is further known that oxidised beta-acids, more particularly hulupones, can be used to impart hop-derived bitterness to beer.

The popularity of domestic appliances for preparing and dispensing carbonated beverages from concentrated syrup, such as Sodastream^{®}, has grown rapidly. These appliances produce carbonated beverages by carbonating water and mixing the carbonated water with a flavoured syrup. Given the high flexibility and convenience provided by these appliances, it would be desirable to expand the assortment of beverages that can be produced in this way to also include compositions of greater flavour complexity.

The benefits of producing beverages from a concentrate have been recognized in the art. However, the production of concentrates having adequate physicochemical stability and that can suitably be used to produce a good quality hopped alcoholic beverage having a foam head represents a challenging task.

The preparation of cold drinks in dispensing machines by reconstitution of a powder typically has the disadvantage that the powder does not dissolve effectively during the mixing process. This results in dispensed beverages of poor quality and leads to damaging accumulation of residues in the dispensing machine.

Liquid beverage concentrates offer the advantage that they can be diluted very quickly and do not leave any residue. However, it is a challenge to provide liquid beverage concentrates that have sufficient physical and chemical stability. In case of concentrates for the preparation of beer-like beverages it is especially challenging to provide a liquid concentrate that is sufficiently stable and that can be reconstituted to form a good tasting beverage with a stable foam head.

Stability of liquid concentrates can be adversely affected by the precipitation of solutes (e.g. proteins, sugars, hop acids) and/or reactions between solutes (e.g. between acids and ethanol).

US 2016/230133 describes a method of preparing a concentrate from an alcoholic beverage, comprising:
- subjecting an alcoholic beverage to a membrane process by which at least some water and alcohol pass through a membrane to be part of a permeate and other components of the alcoholic beverage do not pass through the membrane and are part of a retentate;
- freezing water in the retentate to form ice; and
- removing ice from the retentate to reduce water content and form a beverage concentrate having a solids concentration of at least 30% and an alcohol concentration of 20% or less.

US 2016/0073673 describes a beverage precursor useful for the preparation of a beer-flavored beverage, the beverage precursor comprising at least one flavor compound selected from a first group of compounds, at least one flavor compound selected from a second group of compounds, and at least one compound selected from a third group of compounds;
the first group of compounds consisting of 3-methylbutanol, 2-methylbutanol, 2,3-butanedione,vanilline, 2-methylpropanol, 3-methylbutanal, 2,3-pentanedione,2-methylpropanal, 2-methylbutanal, furaneol, 2-aminoacetophenone,furfural and ethylfuraneol;
the second group consisting of 2-phenylethanol, 2-phenylacetic acid, 2-phenylethyl acetate, phenylacetaldehyde, myrcene, geraniol, b-citronellol and linalool; and
the third group consisting of hops extract, tetra-iso-extract 10%, rho-iso-extract 10%, isomerized hop extract 30%, cis-isohumolone, trans-isohumolone, cis-isocohumulone, transisocohumulone, iso-adhumulone,and comultifidolglycoside;
and the beverage precursor is mixable with water, ethanol, and/or vodka to form a beverage having the flavour of beer without brewing, fermentation, or distillation.

US 2016/0280455 describes a disposable package of a beverage forming apparatus for making a beverage when a liquid is supplied to the disposable package by the beverage forming apparatus, the disposable package comprising: an impermeable rupturable capsule including a bottom wall and a tubular sidewall extending upwardly from the bottom wall defining an interior space having a flavour medium therein. The flavour medium can have the aroma and/or taste and/or mouthfeel of beer, wine, sparkling wine, cider, whiskey, gin, vermouth, rum, tequila, and/or an alcoholic mixed drink.

WO 2017/167865 concerns a single-serve container comprising a malt based beverage concentrate or fermented beverage concentrate, characterized in that said concentrate is in a liquid state, has a dynamic viscosity of maximally 40.10³ mPa.s; a real extract density of at least 2,6°P; and an alcohol content of at least 1 vol%. This patent application further describes a method for obtaining a beverage comprising the steps of:
a. providing a first single-serve container comprising the aforementioned malt based beverage concentrate;
b. providing a second single-serve container containing an ethanol solution having an ethanol concentration of 75 vol% or more;
c. providing a liquid diluent source;
d. mixing a portion of the diluent source with the content of the second single-serve container, to obtain an intermediate liquid mixture having an alcohol content of 30 vol% or less;
e. mixing the content of the first single-serve container with said intermediate liquid mixture and potentially an additional amount of the liquid diluent to obtain a beverage.

### SUMMARY OF THE INVENTION

The inventors have developed a capsule that can suitably be used to prepare a hopped alcoholic beverage with a foam head, similar to ordinary beer. To prepare such a beverage, the contents of the capsule are combined with carbonated water and dispensed into a e.g. a drinking glass.

The capsule of the present invention comprises at least two compartments, including a first compartment and a second compartment; wherein the first compartment comprises 5-30 mL of an aqueous liquid having an ethanol content of 0-10% ABV and comprising 0.1-25wt.% of protein; and wherein the second compartment comprises 5-50 mL of an alcoholic liquid containing 20-99.9 wt.% ethanol, 0-60 wt.% water, and 30-2,000 mg/kg of hop acids acids selected from iso-alpha acids, hydrogenated iso-alpha acids, hulupones and combinations thereof, and wherein ethanol and water together constitute at least 80 wt.% of the alcoholic liquid.

By separating ethanol and hop acids from the other components needed for the preparation of a good quality hopped alcoholic beverage, relevant advantages are realised. Flavour changes due to the formation of ethyl esters (e.g. ethyl acetate) and/or haze formation due to the precipitation of proteins and/or saccharides are avoided. In addition, precipitation of poorly water-soluble hop acids is prevented by dissolving these hop acids in the alcoholic liquid. In other words, due to the partitioning of on the one hand water and protein and on the other hand ethanol and hop acids, both the aqueous liquid and the alcoholic liquid are highly stable.

The invention also pertains to a process of preparing a single serve capsule according to the present invention, said process comprising:
- combining an liquid aqueous composition and a source of a proteinaceous foaming agent to produce the aqueous liquid, said source of a proteinaceous foaming agent containing, calculated by weight of dry matter, at least 3 wt.% of proteinaceous foaming agent;
- combining a liquid alcoholic composition and a source of hop acids to produce the alcoholic liquid, said liquid alcoholic composition containing at least 30 wt.% ethanol and not more than 60 wt.% water, ethanol and water together constituting at least 80 wt.% of the liquid alcoholic composition, said source of hop acids containing at least 10 wt.% of hop acids selected from iso-alpha acids, hydrogenated iso-alpha acids, hulupones and combinations thereof;
- providing a capsule comprising at least two compartments, including a first compartment and a second compartment;
- introducing the aqueous liquid into the first compartment of the capsule;
- introducing the alcoholic liquid into the second compartment of the capsule; and
- closing the first and second compartments of the capsule.

A good quality hopped alcoholic beverage with a foam head can be prepared using the singeserve capsule of the present invention by:
- introducing the single serve capsule into a beverage preparation device;
- releasing the aqueous liquid from the first compartment;
- releasing the alcoholic liquid from the second compartment;
- combining the released aqueous liquid, the released alcoholic liquid, water and carbon dioxide to produce a hopped alcoholic beverage;
- dispensing the hopped alcoholic beverage to produce a hopped alcoholic beverage with a foam head.

### FIGURES

Fig. 1 provides a cross-sectional view of a single-serve capsule according to the invention.
Fig. 2 shows a representation of a beverage preparation device that contains a single serve capsule according to the invention.

### DETAILED DESCRIPTION OF THE INVENTION

Thus, one aspect of the present invention concerns a single-serve capsule for preparing a hopped alcoholic beverage with a foam head, said capsule comprising at least two compartments, including a first compartment and a second compartment;
said first compartment comprising 5-30 mL of an aqueous liquid having an ethanol content of 0-10% ABV and comprising 0.1-25 wt.% of protein;
said second compartment comprising 5-50 mL of an alcoholic liquid containing 20-99.9 wt.% ethanol, 0-60 wt.% water, and 30-2,000 mg/kg of hop acids selected from iso-alpha acids, hydrogenated iso-alpha acids, hulupones and combinations thereof; wherein ethanol and water together constitute at least 80 wt.% of the alcoholic liquid.

The term "capsule" as used herein refers to a compartmentalized container suitable for separately holding the two liquid components according to the invention.

The term "single-serve" as used herein is a synonym of "monoportion" or "unit dose" and refers to a capsule comprising sufficient amounts of the aqueous liquid and alcoholic liquid to prepare one serving of reconstituted hopped alcoholic beverage with a foam head. Typically, one serving of said beverage is in the range of 120 ml to 1000 ml. Preferably, one serving of the beverage is in the range of 180-300 ml.

Concentrations of acids as mentioned herein, unless indicated otherwise, also include dissolved salts of these acids as well as dissociated forms of these same acids and salts.

The term "iso-alpha acids" as used herein refers to substances selected from the group of isohumulone, isoadhumulone, isocohumulone, pre-isohumulone, post-isohumulone and combinations thereof. The term "iso-alpha acids" encompasses different stereo-isomers (cis-iso-alpha acids and trans-iso-alpha acids). Iso-alpha-acids are intensely bitter with an estimated threshold value in water of approximately 6 ppm.

The term "hydrogenated iso-alpha acids" refers to substances selected from dihydro-iso-alpha acids, tetrahydro-isoalpha acids, hexahydro-iso-alpha acid and combinations thereof.

The term "hulupones" as used herein refers to substances selected from cohulupone, n-hulupone, adhulupone and combinations thereof. Hulupones are oxidation products of hop beta-acids.

The term "amyl alcohols" as used herein refers to alcohols with the formula C₅H₁₂O.

Concentrations of components in the aqueous liquid or the alcoholic liquid can suitably be determined by gas chromatography and/or high pressure liquid chromatography using a calibration curve. The calibration curve is created by preparing a set of standard solutions with decreasing, known concentrations of the analyte. The detector response (e.g. FID, MS or MS-MS) is measured for each solution. The calibration curve is obtained by plotting the detector responses against the analyte concentrations.

The protein content of the aqueous liquid can suitably be determined by the Kjeldahl method as described in EBC method 9.9.1.

The single serve capsule of the present invention may comprise two or more compartments. Most preferably, the capsule contains two compartments, one comprising the aqueous liquid, the other comprising the alcoholic liquid.

In accordance with a preferred embodiment, the capsule of the present invention comprises a container with at least two compartments separated by a separating wall, including a first compartment containing the aqueous liquid and a second compartment containing the alcoholic liquid, and wherein the compartments are closed, e.g. by a sealed foil or a lid.

Preferably the first compartment of the single serve capsule contains 7-28 mL, more preferably 10-25 mL, most preferably 15-23 mL of the aqueous liquid.

The second compartment of the single serve capsule preferably contains 7-40 mL, more preferably 9-35 mL, most preferably 10-32 mL of the alcoholic liquid.

The combined internal volume of the first compartment and the second compartment preferably does not exceed 60 mL, more preferably said volume is in the range of 12-50 mL, even more preferably in the range of 15-45 mL and most preferably said volume does not exceed 40 mL.

The aqueous liquid and the alcoholic liquid as defined in the present invention are preferably contained in the capsule in a weight ratio of 6:1 to 1:1, more preferably in a weight ratio of 4:1 to 1.1:1, most preferably in a weight ratio of 3:1 to 1.2:1.

In one embodiment of the present invention, the aqueous liquid that is contained in the first compartment of the capsule is a compounded liquid that has been prepared by mixing a liquid aqueous composition with a protein source and optionally further ingredients.

In another embodiment, the aqueous liquid is a beer concentrate, especially a beer concentrate that has been obtained by removing water and/or ethanol from beer (including non-alcoholic beer) by means of nanofiltration, reverse osmosis, forward osmosis and/or freeze concentration.

The aqueous liquid and/or the alcoholic liquid preferably contain(s) a colouring agent selected from yellow colourant, orange colourant, red colourant, brown colourant and combinations thereof. In a particular preferred embodiment the aqueous liquid contains the colouring agent selected from yellow colourant, orange colourant and combinations thereof.

Preferably, the colouring agent is selected from riboflavin, carotenes, malt extract, curcumin, lutein, carthamin and combinations thereof. More preferably, the colouring agent is malt extract, most preferably caramel malt extract.

The aqueous liquid preferably measures 6-79 colour units EBC, more preferably 8-57 colour units EBC and most preferably 8-33 colour units EBC.

The ethanol content of the aqueous liquid preferably does not exceed 8% ABV, more preferably it does not exceed 5% ABV, most preferably it does not exceed 2% ABV.

The pH of the aqueous liquid at 20°C is preferably less than 5.5, more preferably the pH is in the range of 3.0 to 5.0, even more preferably in the range of 3.5 to 4.5 and most preferably in the range of 3.7 to 4.3.

In a preferred embodiment the aqueous liquid contains 50-2,000 mmol/L of at least one acidulant, more preferably 80-1,200 mmol/L wt.% and most preferably 100-1,000 mmol/L.

Preferably the at least one acidulant is selected from lactic acid, citric acid, acetic acid, propionic acid, gluconic acid, malic acid, tartaric acid, fumaric acid, succinic acid, adipic acid, fumaric acid, hydrochloric acid, phosphoric acid, salts of these acids or combinations thereof. More preferably, the at least one acidulant is selected from citric acid; gluconic acid; lactic acid; salts of these acids and combinations thereof. Most preferably, the at least one acidulant is selected from citric acid; gluconic acid; salts of these acids and combinations thereof.

The capsule of the present invention can be used to prepare a hopped alcoholic beverage with an attractive foam head. The protein present in the aqueous liquid contributes to the formation of a foam head during dispensing of the reconstituted carbonated beverage. The protein further stabilises the foam head by preventing it from collapsing shortly after the reconstituted carbonated beverage has been dispensed. Preferably, the aqueous liquid contains 0.05-10 wt.% of a proteinaceous foaming agent, more preferably 0.1-5 wt.% and most preferably 0.2-3 wt.%.

Preferably the proteinaceous foaming agent is selected from Lipid Transfer Protein 1 (LTP1), hordein, casein, wheat protein, egg white protein, whey protein, soy protein, pea protein, Z-proteins, hydrolysates of these proteins and combinations thereof.

In a preferred embodiment the aqueous liquid comprises a proteinaceous foaming agent selected from LTP-1, hordein, protein Z4, protein Z7 and combinations thereof. Even more preferably, the proteinaceous foaming agent is selected from LTP-1, protein Z4, protein Z7 and combinations thereof. LTP-1 employed in accordance with the present process is preferably obtained from barley. Z-proteins, notably protein Z4 and protein Z7, are preferably obtained from cereal grain, more preferably from malt and most preferably from malted barley.

According to a preferred embodiment, the proteinaceous foaming agent is provided by a malt extract. According to a particularly preferred both the colouring agent and the proteinaceous foaming agent are provided by one or more malt extracts.

Preferably, 20-70 wt.%, more preferably 30-65 wt.% and most preferably 40-60 wt.% of the dry matter in the aqueous liquid is dry matter from malt extract.

The aqueous liquid preferably has a water content in the range of 50-98 wt.%, more preferably in the range of 60-96 wt.% and most preferably in the range of 70-94 wt.%.

In a preferred embodiment the aqueous liquid contains 3-50 wt.%, more preferably 5-30 wt.% and most preferably 6-20 wt.% of sugars selected from maltose, sucrose, lactose, glucose, fructose and combinations thereof.

The sugars in the aqueous liquid may suitably be provided by a starch hydrolysate, in particular a starch hydrolysate that containing appreciable quantities of maltose and/or glucose.

Preferably, the aqueous liquid contains maltose in a concentration of 0.5-20 wt.%, more preferably of 1-18 wt.%, even more preferably of 2-16 wt.% and most preferably of 4-15 wt.%.

Preferably the aqueous liquid contains glucose in a concentration of 0.5-25 wt.%, more preferably of 0.8-15 wt.%, even more preferably of 1.0-12 wt.% and most preferably of 1.2-10 wt.%.

The aqueous liquid preferably contains 3-50 wt.%, more preferably 6-45 wt.% and most preferably 12-40 wt.% of soluble fibers. These soluble fibers are advantageously included in the aqueous liquid as they have a favourable impact on the mouthfeel of the reconstituted beverage. Examples of soluble fibers that may be employed include dextrins (including resistant maltodextrins), inulin and polydextrose. Preferably, the soluble fiber is selected from dextrins and polydextrose. According to a particularly preferred embodiment, the soluble fiber employed are dextrins having a degree of polymerization of 4-10.

In a preferred embodiment the aqueous liquid contains 0.05-1.0 wt.%, more preferably 0.1-0.5 wt.% and most preferably 0.2-0.4 wt.% of a foam stabilizer selected from pectins; alginates; xanthan gum; gellan gum; carboxymethyl cellulose; locust bean gum; carrageenans and combinations thereof.

According to a particularly preferred embodiment the aqueous liquid contains 0.05-1.0wt.%, more preferably 0.1-0.5 wt.% and most preferably 0.2-0.4 wt.% of foam stabilizer selected from pectins; alginates and combinations thereof.

The aqueous liquid preferably contains 0-2 mg/L, more preferably 0-1 mg/L and most preferably 0-0.5 mg/L dissolved carbon dioxide.

In view of the poor water-solubility of hop acids in water, it is preferred that the aqueous liquid contains 0-100 mg/L, preferably 0-30 mg/L, more preferably 0-10 mg/L hop acids selected from iso-alpha acids, hydrogenated alpha-acids, hulupones and combinations thereof.

Iso-alpha acids, as well as hydrogenated alpha acids and oxidised alpha-acids (hulupones) contribute to the pleasant bitterness of beer flavour that is appreciated by consumers. In a preferred embodiment, the alcoholic liquid comprises 10-1,000 mg/L, more preferably 25-500 mg/L, most preferably 50-200 mg/L hop acids selected from iso-alpha acids, hydrogenated alpha-acids, hulupones and combinations thereof.

In a particularly preferred embodiment, the alcoholic liquid comprises 10-1,000 mg/L, more preferably 25-500 mg/L, most preferably 50-200 mg/L iso-alpha acids.

Iso-alpha acids may suitably be provided by isomerised hop extract. Preferably, the alcoholic liquid contains 10-10,000 mg/L, more preferably 50-2,000 mg/L and most preferably 250-1,000 mg/L of isomerised hop extract.

The alcoholic liquid that is present in the second compartment of the capsule preferably contains at least 30 wt.% ethanol, more preferably at least 40 wt.% ethanol, even more preferably at least 50 wt.% ethanol and most preferably at least 60 wt.% ethanol.

Together, ethanol and water preferably constitute at least 85 wt.%, more preferably at 90-99.9 wt.% of the alcoholic liquid.

The alcoholic liquid preferably contains 10-800 mg/L, more preferably 20-600 mg/L and most preferably 50-400 mg/L of flavour esters selected from ethyl acetate, ethyl hexanoate, ethyl valerate, isoamyl acetate and combinations thereof. These flavour esters impart a desirable flavour to the reconstituted beverage that is reminiscent of beer.

In another preferred embodiment the alcoholic liquid contains 50-4,000 mg, more preferably 100-3,000 mg, even more preferably 250-2,000 mg of amyl alcohols.

The alcoholic liquid that is employed in the present capsule may suitably comprise ethanol that is obtained from de-alcoholisation of an alcoholic beverage, preferably from the de-alcoholisation of beer.

Vacuum distillation is commonly used to remove alcohol from beer. The distillate so obtained contains ethanol, water as well as a range of volatile beer flavour substances. Such distillates may advantageously be applied in the alcoholic liquid of the present capsule. The term "vacuum distillation" as used herein also encompasses "vacuum evaporation".

Accordingly, in a preferred embodiment, the alcoholic liquid comprises a distillate obtained by distillative de-alcoholisation of an alcohol-containing beer. Most preferably, the alcoholic liquid consists of such a distillate or is an aqueous dilution of such a distillate.

The distillate that is obtained by distillative de-alcoholisiation typically contains volatile beer flavour substances, such as ethyl acetate, isoamyl acetate, amyl alcohols, phenylethyl alcohol and phenyl ethyl acetate.

Preferably, the alcoholic liquid comprises, per kg of ethanol, 50-2,000 mg, more preferably 70-1,500 mg, even more preferably 90-1,200 mg and most preferably 100-800 mg of ethyl acetate.

Preferably, the alcoholic liquid comprises, per kg of ethanol, 5-200 mg, more preferably 7-150 mg, even more preferably 9-120 mg and most preferably 10-80 mg of isoamyl acetate.

In a preferred embodiment the alcoholic liquid contains, per kg of ethanol, 400-5,000 mg, more preferably 600-4,000 mg, even more preferably 700-3,500 mg and most preferably 800-3,000 mg of amyl alcohols.

In another preferred embodiment the alcoholic liquid contains, per kg of ethanol, 8-240 mg, more preferably 11-170 mg, even more preferably 13-140 mg and most preferably 15-100 mg of phenylethyl alcohol.

Preferably, the alcoholic liquid contains, per kg of ethanol, 2-50 mg, more preferably 3-40 mg, even more preferably 3.5-32 mg and most preferably 4-25 mg of phenyl ethyl acetate.

In a preferred embodiment, the alcoholic liquid is prepared by combining an ethanol containing liquid, preferably an ethanol-containing distillate as described herein before, with hop acids selected from iso-alpha acids, hydrogenated iso-alpha acids, hulupones and combinations thereof. Even more preferably the alcoholic liquid is prepared by combining an ethanol containing liquid with iso-alpha acids. Iso-alpha acids may suitably be provided in the form of pre-isomerised hop extract.

Another aspect of the invention relates to a process of preparing a single serve capsule according to the present invention, said process comprising:
- combining an liquid aqueous composition and a source of a proteinaceous foaming agent to produce the aqueous liquid, said source of a proteinaceous foaming agent containing, calculated by weight of dry matter, at least 3 wt.% of proteinaceous foaming agent;
- combining a liquid alcoholic composition and a source of hop acids to produce the alcoholic liquid, said liquid alcoholic composition containing at least 30 wt.% ethanol and not more than 60 wt.% water, ethanol and water together constituting at least 80 wt.% of the liquid alcoholic composition, said source of hop acids containing at least 10 wt.% of hop acids selected from iso-alpha acids, hydrogenated iso-alpha acids, hulupones and combinations thereof;
- providing a capsule comprising at least two compartments, including a first compartment and a second compartment;
- introducing the aqueous liquid into the first compartment of the capsule;
- introducing the alcoholic liquid into the second compartment of the capsule; and
- closing the first and second compartments of the capsule.

The proteinaceous foaming agent that is contained in the source of a proteinaceous foaming agent preferably is a proteinaceous foaming agent as described herein before.

The source of proteinaceous foaming agent that is employed in the present process preferably contains, calculated by weight of dry matter, at least 4 wt.%, more preferably at least 5 wt.%, more preferably at least 10 wt.% of the proteinaceous foaming agent.

According to a particularly preferred embodiment, the source of a proteinaceous foaming agent that is employed in accordance with the invention is malt extract.

Most preferably, the source of a proteinaceous agent is a malt extract. Malt extract offers the advantage that besides proteinaceous foaming agent (e.g. LTP-1 protein and/or Z-proteins), it can provide colour.

In accordance with another preferred embodiment, the present process comprises combining a colouring agent with the liquid aqueous composition and/or the liquid alcoholic composition, said colouring agent being selected from riboflavin, carotenes, malt extract, curcumin, lutein, carthamin and combinations thereof. More preferably, the colouring agent is malt extract, most preferably the colouring agent is caramel malt extract. The colouring agent is preferably combined with the liquid aqueous composition.

Preferably, the process comprises combining of the liquid aqueous composition with at least one acidulant is selected from lactic acid, citric acid, acetic acid, propionic acid, gluconic acid, malic acid, tartaric acid, fumaric acid, succinic acid, adipic acid, fumaric acid, salts of these acids or combinations thereof. More preferably, the at least one acidulant is selected from citric acid; gluconic acid; lactic acid; salts of these acids and combinations thereof. Most preferably, the at least one acidulant is selected from citric acid; gluconic acid; salts of these acids and combinations thereof.

In the present process the aqueous liquid composition is preferably combined with one or more sugars selected from maltose, sucrose, lactose, glucose and fructose. More preferably, the aqueous liquid is combined with a hydrolysed starch component containing, calculated by weight of dry matter, at least 5 wt.%, more preferably at least 10 wt.% and most preferably 15-100 wt.% of maltose and/or glucose.

According to another advantageous embodiment of the process, the aqueous liquid composition is combined with a source of soluble fiber. Examples of soluble fibers that may be employed include dextrins (including resistant maltodextrins), inulin and polydextrose. Preferably, the soluble fiber is selected from dextrins and polydextrose. According to a particularly preferred embodiment, the soluble fiber employed are dextrins having a degree of polymerization of 4-10. Preferably, source of soluble fiber contains at least 20 wt.%, more preferably at least 40 wt.% and most preferably at least 50 wt.% of soluble fiber.

The present process preferably comprises combining of the aqueous liquid composition with a foam stabilizer selected from pectins; alginates; xanthan gum; gellan gum; carboxymethyl cellulose; locust bean gum; carrageenans and combinations thereof. According to a particularly preferred embodiment the foam stabilizer is selected from pectins; alginates and combinations thereof.

The source of hop acids that is employed in the present process preferably contains at least 15 wt.%, more preferably 18-80 wt.% of hop acids selected from iso-alpha acids, hydrogenated iso-alpha acids, hulupones and combinations thereof. Most preferably, the source of hop acids contains at least 10 wt.%, more preferably 15-80 wt.% of iso-alpha acids.

The source of hop acids employed in the present process preferably is a hop extract, most preferably an isomerised hop extract.

According to a particularly preferred embodiment, the liquid alcoholic composition of the present process is obtained from de-alcoholisation of an alcoholic beverage, more preferably from de-alcoholisation of beer. The liquid alcoholic composition is preferably obtained by de-alcoholisation of an alcoholic beverage using vacuum distillation. More preferably, the liquid alcoholic composition is obtained by de-alcoholisation of an alcoholic beer. Liquid alcoholic compositions obtained by de-alcoholisation of beer, especially when vacuum distillation is used to remove alcohol, contain appreciable levels of beer flavour esters (notably ethyl acetate, ethyl hexanoate, ethyl valerate and isoamyl acetate) and higher alcohols (notably n-propanol, iso-butanol, amyl alcohol, iso-amyl alcohol and 2-phenyl ethanol).

Yet another aspect of the invention concerns a method of preparing a hopped alcoholic beverage with a foam head, said method comprising:
- introducing the single serve capsule according to the invention into a beverage preparation device;
- releasing the aqueous liquid from the first compartment;
- releasing the alcoholic liquid from the second compartment;
- combining the released aqueous liquid, the released alcoholic liquid, water and carbon dioxide to produce a hopped alcoholic beverage;
- dispensing the hopped alcoholic beverage to produce a hopped alcoholic beverage with a foam head.

The release of the aqueous liquid and the alcoholic liquid may occur simultaneously or sequentially, in whatever order.

The combining of the released aqueous liquid with water may occur at least partly within the first compartment of the capsule, e.g. by flushing the compartment with water. This flushing water may already contain carbon dioxide and/or the alcoholic liquid. Likewise, the combining of the released alcoholic liquid with water may occur at least partly within the second compartment of the capsule, e.g. by flushing the compartment with water or with water that contains carbon dioxide and/or the aqueous liquid.

The combining of the aqueous liquid, the alcoholic liquid, water and carbon dioxide can be done in different manners.

In a particularly preferred embodiment, first water and carbon dioxide are admixed to produce carbonated water; one part of the carbonated water is mixed with the released alcoholic liquid to produce and alcoholic carbonated aqueous liquid; the other part of the carbonated water is mixed with the released aqueous liquid to produce a diluted carbonated aqueous liquid; and the alcoholic carbonated aqueous liquid and the diluted carbonated aqueous liquid are mixed to produce the hopped alcoholic beverage.

In a further preferred embodiment, water and carbon dioxide are admixed to produce carbonated water, after which the carbonated water is mixed with the released alcoholic liquid to produce and alcoholic carbonated aqueous liquid that is finally mixed with the released aqueous liquid as defined in the present invention.

In another preferred embodiment, first water and the released alcoholic liquid are admixed to produce a diluted alcoholic liquid, after which carbon dioxide is admixed to produce an alcoholic carbonated aqueous liquid that is finally mixed with the released aqueous liquid as defined in the present invention.

In yet another preferred embodiment, water, carbon dioxide and the released alcoholic liquid are mixed in a single step to produce an alcoholic carbonated aqueous liquid, followed by the admixture of the released aqueous liquid.

Preferably, the carbonated water contains 1-8 g/L, more preferably 2-7 g/L dissolved carbon dioxide.

In a preferred embodiment, the beverage preparation device comprises a water reservoir and a reservoir holding pressurized carbon dioxide.

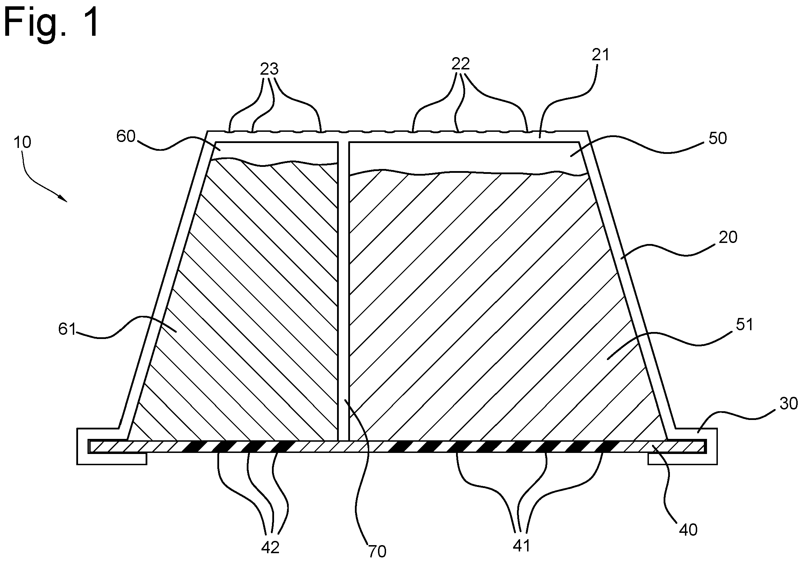

Figure 1 shows a single-serve capsule (10) comprising a body (20) composed of a sheet of aluminium, having the general shape of a truncated cone with a rim (30) at its base. The body (20) terminates at its smallest end with an obtuse cone (21).

The rim (30) is formed by pinching the body around a foil (40) and the capsule (10) is sealed by thermosealing the body (20) and the foil (40). The foil (40) may be composed of aluminium.

The capsule (10) comprises a first compartment (50) and a second compartment (60), separated by a dividing wall (70). The larger first compartment (50) holds an aqueous liquid as defined in the present invention (51) while the smaller second compartment (60) holds an alcoholic liquid (61).

The obtuse cone (21) comprises weakened recesses (22) in the part that defines the first compartment (50). The obtuse cone (21) further contains weakened recesses (23) in the part that defines the second compartment (60).

The foil (40) comprises a number of weakened sections (41) in the part that defines the first compartment (50) and weakened recesses (42) in the part that defines the second compartment (60).

In use, both the weakened recesses (22) and (23) are punctured by tubular inlets and the weakened sections (41) and (42) in the foil are penetrated by tubular outlets. Next, carbonated water that is injected into the first compartment (50) and into the second compartment (60) through the tubular inlets washes out the aqueous liquid (51) from the first compartment (50) and the alcoholic liquid (61) from the second compartment (60) through the output channels.

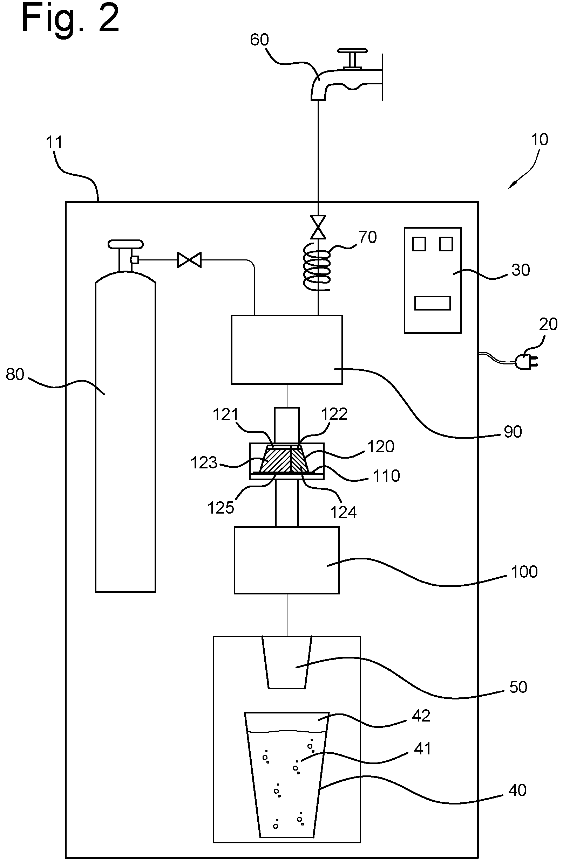

Figure 2 shows a representation of a device (10) for preparing a hopped alcoholic beverage with a foam head using a single serve capsule as depicted in Figure 1. The device includes a housing (11) which houses the mechanical and electronic components of the device (10). The housing (11) can be formed of plastic and/or metal.

The device (10) comprises a power supply (20) and a control system (30) operable to activate the device and control functions of the device (e.g. the volume, temperature and/or alcohol content of the dispensed hopped alcoholic beverage). Also shown is an empty glass (40) that is positioned underneath the dispensing unit (50).

The device (10) also includes a source of water in the form of a water tap (60) and a cooling unit (70). The device (10) further comprises a cylinder (80) containing pressurised carbon dioxide, a carbonation unit (90), a mixing unit (100) and a receptacle (110) for receiving a twocompartment single serve capsule (120).

The single serve capsule (120) comprises a first compartment (121) containing an aqueous liquid as defined in the invention (123) and a second compartment (122) containing an alcoholic liquid (124). The compartments (121, 122) are sealed by a foil (125).

The device (10) comprises means for opening both the top end and bottom end of the first and second compartments (121,122) of the single serve capsule (120).

In use, a consumer can place the single serve capsule (120) in the receptacle (110) of the device (10). Next, the consumer can activate the device (10) using the control system (30) and await dispensing of the hopped alcoholic beverage from the dispensing unit (50) into the glass (40) to produce a hopped alcoholic beverage (41) with foam head (42).

Upon activation of the device (10) water from the tap (60) and pressurized carbon dioxide from the cylinder (80) are dispensed to the carbonation unit (90). During its passage to the carbonation unit (90) the water is cooled by the cooling unit (70). Once the adequate amounts of water and carbon dioxide have been mixed in the carbonation unit (90), the carbonated water is released from the carbonation unit (90) and flows through the single serve capsule (120) to the mixing unit (100). The stream of carbonated water from the carbonation unit (90) follows two different flow paths, one flow path passes through the first compartment (121) of the single serve capsule (120) while the other flow path passes through the second compartment (123) of the single serve capsule (120).

While passing through the single serve capsule (120), the carbonated water washes out the aqueous liquid (123) and the alcoholic liquid (124) into the mixing unit (100). In the mixing unit (100) the carbonated water, the washed out aqueous liquid and the washed out alcoholic liquid are intimately mixed to produce a hopped alcoholic beverage.

Next then hopped alcoholic beverage beer is released from the mixing unit (100) through the dispensing unit (50) into glass (40) under the formation of a foam head.

It will be understood that in the device of Figure 1 the single serve capsule (120) may be replaced by two separate capsules, one containing the aqueous liquid, the other containing the alcoholic liquid.

The invention is further illustrated by the following non-limiting examples.

### EXAMPLES

### Example 1

A single serve capsule according to the invention was prepared using a capsule comprising two compartments. One compartment (compartment A) has an internal volume of 18 mL, the other compartment (compartment B) has an internal volume of 50 mL.

An aqueous liquid was prepared on the basis of the recipe that is shown in Table 1.

**Table 1**

| | **g/L** |
|---|---|
| Malt extract ¹ | 333 |
| Soluble fibers ² | 250 |
| Water | Remainder |

| | |
|---|---|
| ¹ 65 wt.% dry matter, 24.3 wt.% sugars (including 19 wt.% maltose and 3.3 wt.% glucose), 2.3 wt.% protein, 150 EBC ² 50/50 (w/w) blend of Litesse^{®} Ultra Solution -70wt.% solids (Danisco UK Limited) and Fibersol-2^{®} (ADM/Matsutani LLC) | |

An alcoholic liquid containing 21.6% ABW ethanol was prepared on the basis of the recipe that is shown in Table 2.

**Table 2**

| | **mg/L** |
|---|---|
| Iso-alpha acids ¹ | 100 |
| Beer flavour esters | 82 |
| Higher alcohols | 444 |
| De-alcoholisation distillate ² | Remainder |

| | |
|---|---|
| ¹ provided by isomerised hop extract containing 22.5 wt.% iso-alpha acids ² obtained by vacuum distillation of an alcoholic lager beer (contains 21.6 wt.% (27.4% ABV) of ethanol, 60 ppm ethyl acetate; 5 ppm isoamyl acetate and 400 ppm higher alcohols) | |

15 mL of the aqueous liquid was introduced in compartment A of the capsule. Furthermore, 45 mL of the alcoholic liquid was introduced in compartment B. After filling, the compartments were sealed with a flexible foil.

The contents of the single serve capsule were mixed with carbonated water (6.5g/L dissolved carbon dioxide) to arrive at a total volume of 250 mL.

The resulting drink had a stable foam head. The drink was evaluated by a trained beer tasting panel and was well-received. There was some variation in perception, but they all agreed that the taste of the drink was similar to that of ordinary beer. The main difference with ordinary beer noticed by the panel was the pale colour of the drink.

### Example 2

A single serve capsule according to the invention is prepared using a capsule comprising two compartments. One compartment (compartment A) has an internal volume of 12 mL, the other compartment (compartment B) has an internal volume of 33 mL.

An aqueous liquid is prepared on the basis of the recipe that is shown in Table 3.

**Table 3**

| | **g/L** |
|---|---|
| Malt extract ¹ | 500 |
| Soluble fibers ² | 375 |
| Malt extract ³ | 0.41 |
| Propylene glycol alginate | 0.1 |
| Lactic acid | 11.4 |
| Water | Remainder |

| | |
|---|---|
| ¹ 65 wt.% dry matter, 24.3 wt.% sugars (including 19 wt.% maltose and 3.3 wt.% glucose), 2.3 wt.% protein, 150 EBC ² 50/50 (w/w) blend of Litesse^{®} Ultra, Solution Grades (Danisco UK Limited) and Fibersol-2^{®} (ADM/Matsutani LLC) ³ 3.2 wt.% sugars, 1.5 wt.% protein, 15,500 EBC | |

An alcoholic liquid containing 33.1% ABW ethanol is prepared on the basis of the recipe that is shown in Table 4.

**Table 4**

| | **mg/L** |
|---|---|
| Iso-alpha acids¹ | 150 |
| Beer flavour esters | 125 |
| Higher alcohols | 664 |
| De-alcoholisation distillate ² | Remainder |

| | |
|---|---|
| ¹ provided by isomerised hop extract containing 22.5 wt.% iso-alpha acids ² obtained by vacuum distillation of an alcoholic lager beer (contains 33.1 wt.% (42% ABV) of ethanol, 100 ppm ethyl acetate; 11 ppm isoamyl acetate and 630 ppm higher alcohols). | |

10 mL of the aqueous liquid is introduced in compartment A of the capsule. Furthermore, 30 mL of the alcoholic liquid is introduced in compartment B. After filling, the compartments are sealed with a flexible foil.

The contents of the single serve capsule are mixed with carbonated water 6g/L dissolved carbon dioxide) to arrive at a total volume of 250 mL.

The drink so obtained is similar to a pilsner in terms of taste and appearance.

### Example 3

A non-hopped lager (containing 5% ABV was de-alcoholised by vacuum distillation (Schmidt-Bretten, Bretten, Germany - feed: 5 hL/hr; steam mass flow rate: 100 kg/h; outlet pressure: 3.5 bar; vacuum setting: 90 mbar; outlet temperature: 3°C). The resulting de-alcoholised beer had an ethanol content of 0.01% ABV.

Distillate produced during de-alcoholisation was recovered and analysed. The results are shown in Table 5.

**Table 5**

| | |
|---|---|
| Ethanol | 60 wt.% |
| Ethyl acetate | 50.2 mg/L |
| Isoamyl acetate | 4.56 mg/L |
| Amyl alcohols | 206 mg/L |
| Phenylethyl alcohol | 5.09mg/L |
| Phenyl ethyl acetate | 2.77 mg/L |

The dealcoholized non-hopped lager was concentrated by means of nanofiltration using the following set-up:

### Nanofiltration membrane

| | |
|---|---|
| **Type** | Configuration: Spiral wound |
| | Membrane polymer: Composite polyamide |
| | Brine spacer material: Polypropylene |
| **Specifications** | Permeate Flow: |
| | • MgSO₄: 7.6 m³/d |
| | • NaCl: 9.5 m³/d |
| | Stabilised salt rejection¹: |
| | • MgSO₄: >97% (2000 ppm, 4.8 bar, 25 °C, 15% recovery, pH 6.5) |
| | • NaCl: 89-95% (500 ppm, 4.8 bar, 25 °C, 15% recovery, pH 7.0) |
| | Nominal membrane area: 7.9 m² |

| | |
|---|---|
| ¹ Equates to a MW cut-off of appr. 200 Da | |

### Configuration

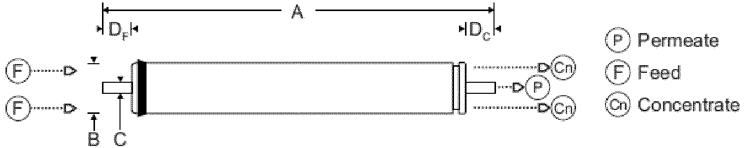

| | |
|---|---|
| A (total length) | = 1016 mm |
| B (ATD diameter) | = 100.3 mm |
| C (connection diameter) | = 19.1 mm |
| D_{F} (core tube extension - feed side) | = 26.7 mm |
| D_{C} (core tube extension - conc. side) | = 26.7 mm |

### Maximum operating limits

- Pressure: 80 bar
- Temperature: 28 °C
- Pressure drop: 0.7 bar
- Feed flow: 3.6 m³/h
- Chlorine concentration: <0.1 ppm
- Feed water SDI (15 min.) : 5.0
- Feed water turbidity: 1.0 NTU
- Feed water pH: 3.0-10.0
- Maximum ratio of concentrate to permeate flow for any element: 5:1

### Filtration run

Circulation of the beer was effected by a piston pump. This pump has a capacity of 1 m³/h and a maximum discharge pressure of 20-80 bar. The test-unit was limited to approximately 30 bar and was protected by means of an overpressure relief valve having a set-point of 40 bar.

Initial permeate production started at a pressure of around 15 bar (osmotic pressure).

In total 100 litres of beer were filtered, yielding 84.6 litres of permeate and 16.1 litres of liquid concentrate. Consequently, the concentration factor achieved was 100/15.4 = 6.5.

The composition of the beer concentrate so obtained is shown in Table 6.

**Table 6**

| | |
|---|---|
| Acetic acid | 310 mg/L |
| Riboflavin | 890 µg/L |
| Oleic acid | 1040 µg/L |
| Linoleic acid | 980 µg/L |
| Alpha-linolenic acid | 630 µg/L |
| Free amino nitrogen | 310 mg/L |
| Maltose | 1.1 g/L |
| Maltotriose | 7.0 g/L |
| Maltotetraose | 22 g/L |

The liquid beer concentrate had a surface tension of 46 mN/m.

### Comparative Example A

A commercial hopped lager beer having an alcohol content of 5.0% ABV and iso-alpha acids content of 19 mg/L was concentrated by means of nanofiltration using the same set-up as in Example 3.

Initial permeate production started at a pressure of around 4 bar (osmotic pressure). In total 200 litres of beer were filtered, yielding 172.3 litres of permeate and 27.7 litres of concentrate. Consequently, the concentration factor achieved was 200/27.7 = 7.2.

The hopped, alcoholic beer concentrate so obtained was cloudy, had an ethanol content of 4.71% ABV, a specific gravity of 1.8298 (20°P) and a surface tension of 39.7 mN/m. The concentrate contained 78.7 mg/L iso-alpha acids, meaning that 42.5% of the iso-alpha acids were lost during the nanofiltration step.

### Example 4

The liquid beer concentrate of Comparative Example A and the beer concentrate of Example 3 were standardised to a concentration factor of 6 *(i.e.* 6-fold more concentrated than the original non-hopped lager) by adding a diluent as shown in Table 7.

**Table 7**

| **Sample** | **Liquid beer concentrate** | **Diluant** |
|---|---|---|
| A | Comparative Example A | Demineralised water |
| B | Example 3 | Demineralised water |
| C | Example 3 | Demineralised water and ethanol to produce a concentrate containing 5% ABV ethanol |
| D | Example 3 | Demineralised water and pre-isomerised hop extract, to produce a concentrate containing 120 mg/L of iso-alpha acids |

Following preparation, the samples were kept at 0°C for 7 days. Next, the turbidity of the samples was measured at 0°C (in triplicate) at angles of scatter of 25° and 90°, using a Sigrist photometer. The average results are shown in Table 8, in EBC units.

**Table 8**

| **Sample** | **Turbidity** | |
|---|---|---|
| | **90°** | **25°** |
| A | >100 | >100 |
| B | 46.07 | 65.93 |
| C | 42.97 | 62.17 |
| D | 62.80 | 78.33 |

These results showed that the introduction of iso-alpha acids into the beer concentrate caused haze formation, probably as a result of precipitation of iso-alpha acids.

Aliquots of samples A, B, C and D are stored at 30°C and 40°C for 3 months during which period concentration levels of ethyl esters, turbidity and colour are monitored.

It is found that samples B and D are more stable than the other samples. Unlike samples B and D, samples A and C show significant formation of ethyl esters during the storage period.

### Example 5

A de-alcoholised non-hopped lager and an alcoholic distillate are produced in the same way as in Example 3.

The de-alcoholised non-hopped beer is concentrated by means of reverse osmosis using a reverse osmosis flat sheet filtration membrane made of thin film composite comprising a polyamide membrane layer on a polyester (PET) support material (RO90, ex Alfa Laval, operating pressure 5-25 bar). This membrane has a rejection of at least 90%, measured on 2000 ppm NaCl, at 9 bar and 25°C.

### Example 6

A single serve capsule according to the invention is prepared using a capsule comprising two compartments. One compartment (compartment A) has an internal volume of 20 mL, the other compartment (compartment B) has an internal volume of 35 mL.

The alcoholic distillate of Example 3 is mixed with a pre-isomerised hop extract to produce a solution containing 210 mg/L iso-alpha acids.

18 mL of the concentrated alcoholic liquid containing hop extract is introduced in compartment A of the capsule. Furthermore, 32 mL of the liquid beer concentrate of Example 3 is introduced in compartment B. After filling, the compartments are sealed with a flexible foil.

### Example 7

A dealcoholized non-hopped lager was concentrated by means of nanofiltration as described in Example 3. The beer concentrate so obtained (Concentrate A) was subjected to accelerated storage at 30°C and 40°C. The same storage tests were conducted with the same concentrate after ethanol had been added in a concentration of 5 wt.% (Concentrate B).

Before the storage test and after 3 months storage the concentration levels of a number of beer flavour substances were determined. The results of these analyses are shown in Table 9.

**Table 9**

| **Samples** | | **Microgram/L** | | | | | |
|---|---|---|---|---|---|---|---|
| | | Ethyl octanoate | Ethyl acetate | Ethyl propionate | Ethyl butanoate | Ethyl 3- methyl- butanoate | Ethyl phenylacetate |
| A | Fresh | 0 | 640 | 4.7 | 7.9 | 0.1 | 0.0 |
| | 30°C | 0 | 400 | 4.2 | 6.2 | 0.1 | 0.0 |
| | 40°C | 0 | 320 | 4.7 | 6.0 | 0.2 | 0.0 |
| B | Fresh | 0 | 720 | 20 | 52 | 1.2 | 0.0 |
| | 30°C | 4,600 | 2,040 | 74 | 163 | 9.7 | 0.2 |
| | 40°C | 4,320 | 4,040 | 152 | 230 | 25 | 0.5 |

### Example 8

A lager beer having an ethanol content of 5 vol.% was concentrated by means of nanofiltration as described in Comparative Example A. Accelerated storage tests were conducted with this concentrate (Concentrate A) at 30°C and 40°C.

Before the storage test and after 3 months the concentration levels of a number of beer flavour substances were determined. The results of these analyses are shown in Table 10.

**Table 10**

| **Samples** | **Microgram/L** | |
|---|---|---|
| | Ethyl 3- methylbutanoate | Ethyl phenylacetate |
| Fresh | 8.5 | 0.0 |
| 30°C | 23 | 0.2 |
| 40°C | 47 | 0.4 |

### Example 9

Two reconstituted beers were prepared by mixing 32 mL of beer concentrate, with 11.4 mL of alcoholic liquid and 205 mL of carbonated water (Royal Club^{™} soda water, the Netherlands).

The compositions of the beer concentrates and the alcoholic liquids used in the preparation of the reconstituted beers are shown in Table 11.

**Table 11**

| | **Reconstituted beer A** | **Reconstituted beer B** |
|---|---|---|
| Beer concentrate | Beer concentrate of Example 1 | Beer concentrate of Example 1, containing 6.56 mg iso-alpha acids per mL |
| Alcoholic liquid | Ethanol (95%), containing 18.42 mg iso-alpha acids per mL | Ethanol (95%) |

Reconstituted beer A was completely clear, had a nice foam head and a pleasant bitter taste. Reconstituted beer B contained some precipitate.

## Claims

1. A single-serve capsule for preparing a hopped alcoholic beverage with a foam head, said capsule comprising at least two compartments, including a first compartment and a second compartment;
said first compartment comprising 5-30 mL of an aqueous liquid having an ethanol content of 0-10% ABV and comprising 0.1-25 wt.% of protein;
said second compartment comprising 5-50 mL of an alcoholic liquid containing 20-99.9 wt.% ethanol, 0-60 wt.% water, and 50-2,000 mg/kg of hop acids selected from iso-alpha acids, hydrogenated iso-alpha acids, hulupones and combinations thereof; wherein
ethanol and water together constitute at least 80 wt.% of the alcoholic liquid.

2. Single serve capsule according to claim 1, wherein the aqueous liquid and/or the alcoholic liquid contains a colouring agent selected from yellow colourant, orange colourant, red colourant, brown colourant and combinations thereof.

3. Single serve capsule according to claim 2, wherein the colouring agent is selected from riboflavin; carotenes; caramel; malt extract; curcumin; lutein; carthamin; and combinations thereof.

4. Single serve capsule according to any one of the preceding claims, wherein the aqueous liquid measures 6-79 colour units EBC.

5. Single serve capsule according to any one of the preceding claims, wherein the aqueous liquid has a pH of less than 5.5.

6. Single serve capsule according to any one of the preceding claims, wherein the aqueous liquid contains 50-2,000 mmol/L of acidulant selected from lactic acid; citric acid; acetic acid; propionic acid; gluconic acid; malic acid; tartaric acid; fumaric acid; succinic acid; adipic acid; fumaric acid, hydrochloric acid, phosphoric acid, salts of these acids; and combinations thereof.

7. Single serve capsule according to any one of the preceding claims, wherein the aqueous liquid contains 0.05-10 wt.% of a proteinaceous foaming agent.

8. Single serve capsule according to claim 7, wherein the proteinaceous foaming agent is selected from LTP1, hordein, casein, wheat protein, egg white protein, whey protein, soy protein, pea protein, Z-proteins, hydrolysates of these proteins and combinations thereof.

9. Single serve capsule according to any one of the preceding claims, wherein the aqueous liquid contains 3-50 wt.% of sugars selected from maltose; sucrose; lactose; glucose; fructose; and combinations thereof.

10. Single serve capsule according to claim 9, wherein the aqueous liquid contains 3-50 wt.% of soluble fiber.

11. Single serve capsule according to any one of the preceding claims, wherein the aqueous liquid contains 0.05-1.0 wt.% of foam stabilizer selected from pectins; alginates; xanthan gum; gellan gum; carboxymethyl cellulose; locust bean gum; carrageenans and combinations thereof.

12. Single serve capsule according to any one of the preceding claims, wherein the alcoholic liquid contains 10-800 mg/L of beer flavour esters selected from ethyl acetate; ethyl hexanoate; ethyl valerate; isoamyl acetate; and combinations thereof.

13. Single serve capsule according to any one of the preceding claims, wherein the combined internal volume of the first and second compartment does not exceed 60 mL.

14. A process of preparing a single serve capsule according to any one of the preceding claims, said process comprising:
• combining an liquid aqueous composition and a source of a proteinaceous foaming agent to produce the aqueous liquid, said source of a proteinaceous foaming agent containing, calculated by weight or dry matter, at least 3 wt.% of proteinaceous foaming agent;
• combining a liquid alcoholic composition and a source of hop acids to produce the alcoholic liquid, said liquid alcoholic composition containing at least 30 wt.% ethanol and not more than 60 wt.% water, ethanol and water together constituting at least 80 wt.% of the liquid alcoholic composition, said source of hop acids containing at least 10 wt.% of hop acids selected from iso-alpha acids, hydrogenated iso-alpha acids, hulupones and combinations thereof;
• providing a capsule comprising at least two compartments, including a first compartment and a second compartment;
• introducing the aqueous liquid into the first compartment of the capsule;
• introducing the alcoholic liquid into the second compartment of the capsule; and
• closing the first and second compartments of the capsule.

15. A method of preparing a hopped alcoholic beverage with a foam head, said method comprising:
• introducing the single serve capsule according to any one of claims 1-13 into a beverage preparation device;
• releasing the aqueous liquid from the first compartment;
• releasing the alcoholic liquid from the second compartment;
• combining the released aqueous liquid, the released alcoholic liquid, water and carbon dioxide to produce a hopped alcoholic beverage;
• dispensing the hopped alcoholic beverage to produce a hopped alcoholic beverage with a foam head.

## Patentansprüche

1. Einzelportionskapsel zur Herstellung eines gehopften alkoholischen Getränks mit einer Schaumkrone, wobei die besagte Kapsel mindestens zwei Kammern umfasst, die eine erste Kammer und eine zweite Kammer enthalten;
wobei die besagte erste Kammer 5-30 mL einer wässrigen Flüssigkeit mit einem Ethanolgehalt von 0-10 % ABV umfasst und 0,1-25 Gew.-% Protein umfasst;
wobei die besagte zweite Kammer 5-50 mL einer alkoholischen Flüssigkeit enthält, die 20-99,9 Gew.-% Ethanol, 0-60 Gew.-% Wasser und 50-2.000 mg/kg Hopfensäuren enthält, die aus Iso-Alpha-Säuren, hydrierten Iso-Alpha-Säuren, Huluponen und Kombinationen davon ausgewählt sind; wobei Ethanol und Wasser zusammen mindestens 80 Gew.-% der alkoholischen Flüssigkeit ausmachen.

2. Einzelportionskapsel nach Anspruch 1, wobei die wässrige Flüssigkeit und/oder die alkoholische Flüssigkeit einen Farbstoff enthalten, der aus gelbem Farbstoff, orangefarbenem Farbstoff, rotem Farbstoff, braunem Farbstoff und Kombinationen davon ausgewählt ist.

3. Einzelportionskapsel nach Anspruch 2, wobei der Farbstoff aus Riboflavin; Carotinen; Karamell; Malzextrakt; Curcumin; Lutein; Carthamin; und Kombinationen davon ausgewählt ist.

4. Einzelportionskapsel nach einem der vorhergehenden Ansprüche, wobei die wässrige Flüssigkeit 6-79 Farbeinheiten EBC misst.

5. Einzelportionskapsel nach einem der vorhergehenden Ansprüche, wobei die wässrige Flüssigkeit einen pH-Wert von weniger als 5,5 aufweist.

6. Einzelportionskapsel nach einem der vorhergehenden Ansprüche, wobei die wässrige Flüssigkeit 50-2.000 mmol/L Säuerungsmittel enthält, das aus Milchsäure; Zitronensäure; Essigsäure; Propionsäure; Gluconsäure; Apfelsäure; Weinsäure; Fumarsäure; Bernsteinsäure; Adipinsäure; Fumarsäure; Salzsäure, Phosphorsäure, Salzen dieser Säuren; und Kombinationen davon ausgewählt ist.

7. Einzelportionskapsel nach einem der vorhergehenden Ansprüche, wobei die wässrige Flüssigkeit 0,05-10 Gew.-% eines proteinhaltigen Schaummittels enthält.

8. Einzelportionskapsel nach Anspruch 7, wobei das proteinhaltige Schaummittel aus LTP1, Hordein, Casein, Weizenprotein, Eiweißprotein, Molkenprotein, Sojaprotein, Erbsenprotein, Z-Proteinen, Hydrolysaten dieser Proteine und Kombinationen davon ausgewählt ist.

9. Einzelportionskapsel nach einem der vorhergehenden Ansprüche, wobei die wässrige Flüssigkeit 3-50 Gew.-% Zucker enthält, der aus Maltose; Saccharose; Laktose; Glukose; Fruktose; und Kombinationen davon ausgewählt ist.

10. Einzelportionskapsel nach Anspruch 9, wobei die wässrige Flüssigkeit 3-50 Gew.-% lösliche Ballaststoffe enthält.

11. Einzelportionskapsel nach einem der vorhergehenden Ansprüche, wobei die wässrige Flüssigkeit 0,05-1,0 Gew.-% Schaumstabilisator enthält, der aus Pektinen; Alginaten; Xanthangummi; Gellangummi; Carboxymethylcellulose; Johannisbrotkernmehl; Carrageenen und Kombinationen davon ausgewählt ist.

12. Einzelportionskapsel nach einem der vorhergehenden Ansprüche, wobei die alkoholische Flüssigkeit 10-800 mg/L Bieraromaester enthält, die aus Ethylacetat; Ethylhexanoat; Ethylvalerat; Isoamylacetat; und Kombinationen davon ausgewählt sind.

13. Einzelportionskapsel nach einem der vorhergehenden Ansprüche, wobei das kombinierte Innenvolumen der ersten und zweiten Kammer 60 m L nicht überschreitet.

14. Verfahren zur Herstellung einer Einzelportionskapsel nach einem der vorhergehenden Ansprüche, wobei das besagte Verfahren Folgendes umfasst:
• Kombinieren einer flüssigen wässrigen Zusammensetzung und einer Quelle eines proteinhaltigen Schaummittels zum Herstellen der wässrigen Flüssigkeit, wobei die besagte Quelle eines proteinhaltigen Schaummittels, berechnet nach Gewicht oder Trockenmasse, mindestens 3 Gew.-% proteinhaltiges Schaummittel enthält;
• Kombinieren einer flüssigen alkoholischen Zusammensetzung und einer Quelle für Hopfensäuren zum Herstellen der alkoholischen Flüssigkeit, wobei die besagte flüssige alkoholische Zusammensetzung mindestens 30 Gew.-% Ethanol und nicht mehr als 60 Gew.-% Wasser enthält, wobei Ethanol und Wasser zusammen mindestens 80 Gew.-% der flüssigen alkoholischen Zusammensetzung ausmachen, wobei die besagte Quelle für Hopfensäuren mindestens 10 Gew.-% Hopfensäuren enthält, die aus Iso-Alpha-Säuren, hydrierten Iso-Alpha-Säuren, Huluponen und Kombinationen davon ausgewählt sind;
• Bereitstellen einer Kapsel, die mindestens zwei Kammern umfasst, die eine erste Kammer und eine zweite Kammer enthalten;
• Einbringen der wässrigen Flüssigkeit in die erste Kammer der Kapsel;
• Einbringen der alkoholischen Flüssigkeit in die zweite Kammer der Kapsel; und
• Verschließen der ersten und zweiten Kammer der Kapsel.

15. Verfahren zur Herstellung eines gehopften alkoholischen Getränks mit einer Schaumkrone, wobei das besagte Verfahren Folgendes umfasst:
• Einbringen der Einzelportionskapsel nach einem der Ansprüche 1-13 in eine Getränkezubereitungsvorrichtung;
• Freisetzen der wässrigen Flüssigkeit aus der ersten Kammer;
• Freisetzen der alkoholischen Flüssigkeit aus der zweiten Kammer;
• Kombinieren der freigesetzten wässrigen Flüssigkeit, der freigesetzten alkoholischen Flüssigkeit, Wasser und Kohlendioxid, um ein gehopftes alkoholisches Getränk herzustellen;
• Abgeben des gehopften alkoholischen Getränks zur Herstellung eines gehopften alkoholischen Getränks mit einer Schaumkrone.

## Revendications

1. Capsule à usage unique pour la préparation d'une boisson alcoolisée houblonnée avec une tête de mousse, ladite capsule comprenant au moins deux compartiments, incluant un premier compartiment et un deuxième compartiment ;
ledit premier compartiment comprenant 5 à 30 mL d'un liquide aqueux ayant une teneur en éthanol de 0 à 10% vol. d'alcool et comprenant 0,1 à 25 % en poids de protéines ;
ledit deuxième compartiment comprenant 5 à 50 mL d'un liquide alcoolisé contenant 20 à 99,9 % en poids d'éthanol, 0 à 60 % en poids d'eau et 50 à 2000 mg/kg d'acides du houblon choisis parmi les acides iso-alpha, les acides isoalpha hydrogénés, les hulupones et des combinaisons de ceux-ci ; où l'éthanol et l'eau constituent ensemble au moins 80 % en poids du liquide alcoolisé.

2. Capsule à usage unique selon la revendication 1, où le liquide aqueux et/ou le liquide alcoolisé contient un agent colorant choisi parmi un colorant jaune, un colorant orange, un colorant rouge, un colorant brun et des combinaisons de ceux-ci.

3. Capsule à usage unique selon la revendication 2, où l'agent colorant est choisi parmi la riboflavine, les carotènes, le caramel, l'extrait de malt, la curcumine, la lutéine, la carthamine et des combinaisons de ceux-ci.

4. Capsule à usage unique selon l'une quelconque des revendications précédentes, où le liquide aqueux mesure de 6 à 79 unités de couleur EBC.

5. Capsule à usage unique selon l'une quelconque des revendications précédentes, où le liquide aqueux a un pH inférieur à 5,5.

6. Capsule à usage unique selon l'une quelconque des revendications précédentes, où le liquide aqueux contient 50 à 2000 mmol/L d'acidulant choisi parmi l'acide lactique, l'acide citrique, l'acide acétique, l'acide propionique, l'acide gluconique, l'acide malique, l'acide tartrique, l'acide fumarique, l'acide succinique, l'acide adipique, l'acide fumarique, l'acide chlorhydrique, l'acide phosphorique, des sels de ces acides et des combinaisons de ceux-ci.

7. Capsule à usage unique selon l'une quelconque des revendications précédentes, où le liquide aqueux contient 0,05 à 10 % en poids d'un agent moussant protéique.

8. Capsule à usage unique selon la revendication 7, où l'agent moussant protéique est choisi parmi la LTP1, l'hordéine, la caséine, la protéine de blé, la protéine de blanc d'œuf, la protéine de lactosérum, la protéine de soja, la protéine de pois, les protéines Z, des hydrolysats de ces protéines et des combinaisons de ceux-ci.

9. Capsule à usage unique selon l'une quelconque des revendications précédentes, où le liquide aqueux contient 3 à 50 % en poids de sucres choisis parmi le maltose, le saccharose, le lactose, le glucose, le fructose et des combinaisons de ceux-ci.

10. Capsule à usage unique selon la revendication 9, où le liquide aqueux contient 3 à 50 % en poids de fibres solubles.

11. Capsule à usage unique selon l'une quelconque des revendications précédentes, où le liquide aqueux contient 0,05 à 1,0 % en poids de stabilisateur de mousse choisi parmi les pectines, les alginates, la gomme xanthane, la gomme gellane, la carboxyméthylcellulose, la gomme de caroube, les carraghénanes et des combinaisons de ceux-ci.

12. Capsule à usage unique selon l'une quelconque des revendications précédentes, où le liquide alcoolisé contient 10 à 800 mg/L d'esters d'arôme de bière choisis parmi l'acétate d'éthyle, l'hexanoate d'éthyle, le valérate d'éthyle, l'acétate d'isoamyle et des combinaisons de ceux-ci.

13. Capsule à usage unique selon l'une quelconque des revendications précédentes, où le volume interne combiné du premier et du deuxième compartiment ne dépasse pas 60 mL.

14. Procédé de préparation d'une capsule à usage unique selon l'une quelconque des revendications précédentes, ledit procédé comprenant :
• combiner une composition aqueuse liquide et une source d'un agent moussant protéique pour produire le liquide aqueux, ladite source d'un agent moussant protéique contenant, calculé en poids ou en matière sèche, au moins 3 % en poids d'agent moussant protéique ;
• combiner une composition alcoolisée liquide et une source d'acides du houblon pour produire le liquide alcoolisé, ladite composition alcoolisée liquide contenant au moins 30 % en poids d'éthanol et pas plus de 60 % en poids d'eau, l'éthanol et l'eau constituant ensemble au moins 80 % en poids de la composition alcoolisée liquide, ladite source d'acides du houblon contenant au moins 10 % en poids d'acides du houblon choisis parmi les acides iso-alpha, les acides iso-alpha hydrogénés, les hulupones et des combinaisons de ceux-ci ;
• fournir une capsule comprenant au moins deux compartiments, incluant un premier compartiment et un deuxième compartiment ;
• introduire le liquide aqueux dans le premier compartiment de la capsule ;
• introduire le liquide alcoolisé dans le deuxième compartiment de la capsule ; et
• fermer le premier et le deuxième compartiments de la capsule.

15. Procédé de préparation d'une boisson alcoolisée houblonnée avec une tête de mousse, ledit procédé comprenant :
• introduire la capsule à usage unique selon l'une quelconque des revendications 1 à 13 dans un dispositif de préparation de boissons ;
• libérer le liquide aqueux du premier compartiment ;
• libérer le liquide alcoolisé du deuxième compartiment ;
• combiner le liquide aqueux libéré, le liquide alcoolisé libéré, de l'eau et du dioxyde de carbone pour produire une boisson alcoolisée houblonnée ;
• distribuer la boisson alcoolisée houblonnée pour produire une boisson alcoolisée houblonnée avec une tête de mousse.
